# EUROPEAN PATENT APPLICATION

(11) **EP 3 543 114 A1**
(43) Date of publication of application: **25.09.2019**
(21) Application number: 19164123.2
(22) Date of filing: 20.03.2019
(51) Int. Cl.: B64C 13/04, B64C 13/10, B64C 13/50, B64C 25/26, B64C 25/44, B64D 31/04, B64D 43/00, B64D 45/00, F02C 9/28, G01C 23/00, G02B 27/01, G07C 5/08

(54) **PILOT OPERATION VALIDATION AND ADVISORY SYSTEM**

(30) Priority: 23.03.2018 IN 201811010825
(71) Applicant: ROSEMOUNT AEROSPACE INC., Burnsville, MN 55306-4898 (US)
(72) Inventor: LAKSHMANAN, Anitha, 560037 Bangalore (IN); KAR, Jayeeta, 560037 Bangalore (IN)
(74) Representative: Dehns

(57) **Abstract**

A system (100) for validation and advising for aircraft operation includes a processor (112) configured with a data concentrator (122). The processor (112) is configured for obtaining a plurality of flight control signals and perceived pilot operation from the data concentrator (122), evaluating, based on the flight control signals, an intended pilot operation, determining, whether a perceived operation matches the intended pilot operation, and outputting an advising message on an operatively connected display device (124).

## Description

### FOREIGN PRIORITY

This application claims priority to Indian Patent Application No. 201811010825 filed March 23, 2018, the entire contents of which is incorporated herein by reference.

### BACKGROUND

Exemplary embodiments pertain to the art of aircraft operation advisory systems, and more specifically to a pilot operation validation and advisory system.

The pilot in command of an aircraft is responsible for ensuring the safety of the passenger and aircraft. Though pilots are extensively trained, about 80% percent of accidents are caused by pilot error.

By way of example of pilot error, in 2015 an airplane accident occurred after the pilot reported an engine flameout then mistakenly shut down the working engine instead of the distressed engine. According to the official record of the incident, the aircraft's right engine triggered an alarm in the aircraft just 37 seconds after takeoff. When the working engine was erroneously moved into idle mode, the working engine failed to produce enough thrust for its rotating propeller, lapsing into auto-feathering.

In another incident, a rudder malfunction was caused by unnecessary and excessive rudder pedal inputs on the part of the co-pilot, who was operating the aircraft at the time. According to official reports, the enormous stress on the vertical stabilizer was due to the first officer's "unnecessary and excessive" rudder inputs in response to wake turbulence, and not wake turbulence itself.

Presently there are numerous pilot assistance systems for assisting the pilot. However there is no specific system to monitor or validate the pilots operation performed on the critical flight systems.

### BRIEF DESCRIPTION

Disclosed is a system for validation and advising for aircraft operation. The system includes a processor configured with a data concentrator. The processor is configured to obtain a plurality of flight control signals and the perceived pilot operation from the data concentrator, evaluate, based on the flight control signals, an intended pilot operation, and determine via the processor, whether a perceived operation matches the intended pilot operation. The processor then outputs an advising message on an operatively connected display device in case the intended pilot operation is not matching with the perceived pilot operation

Also disclosed is a method for validating and advising an aircraft operation, and a computer program product for performing the method.

### BRIEF DESCRIPTION OF THE DRAWINGS

The following descriptions should not be considered limiting in any way. With reference to the accompanying drawings, like elements are numbered alike:
FIG. 1 is block diagram 100 of a system 100 for pilot validation and advisory according to an embodiment;
FIG. 2 is a functional flow diagram 200 of the system of FIG. 1, according to an embodiment.
FIG. 3 depicts a block diagram 300 of hardware components configured to perform the functions described with respect to FIG. 2 according to an embodiment; and

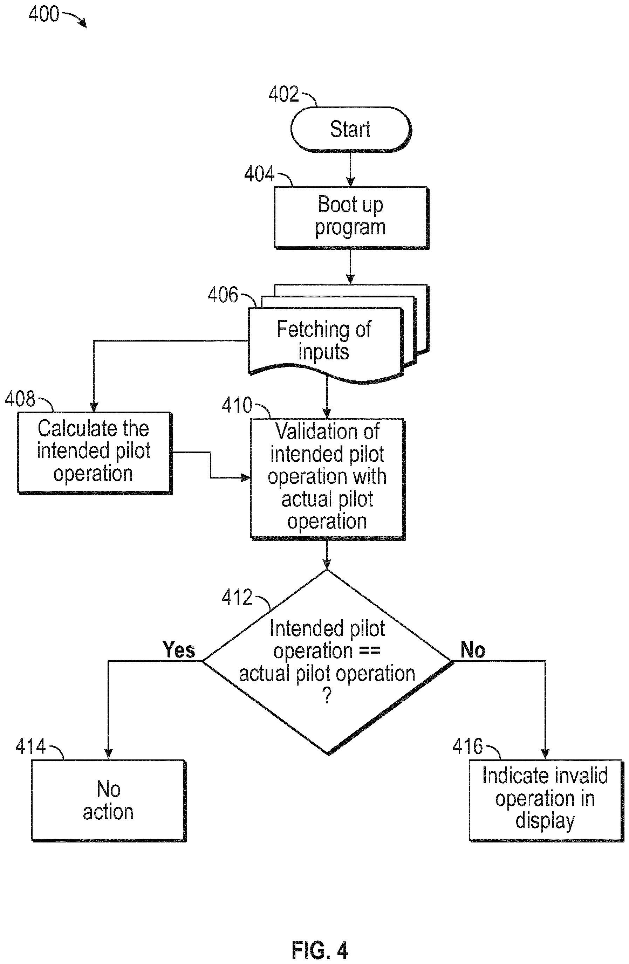

FIG. 4 is a flow diagram for a method 500 for pilot validation and advisory using the system of FIG. 1, according to an embodiment.

### DETAILED DESCRIPTION

A detailed description of one or more embodiments of the disclosed apparatus and method are presented herein by way of exemplification and not limitation with reference to the Figures.

Human operator errors of aircraft in flight can be reduced with a system configured to validate the pilot command applied to critical systems in Aircraft. Critical systems as used herein include engine starting and stopping, aircraft rudder pedal control, and aircraft brake control. According to embodiments described herein, the system indicates the invalid operation performed by the pilot, and proposes the valid operation to be performed. In some aspects, the system will validate the following operation of critical systems by the pilot of the aircraft on which the system is installed.

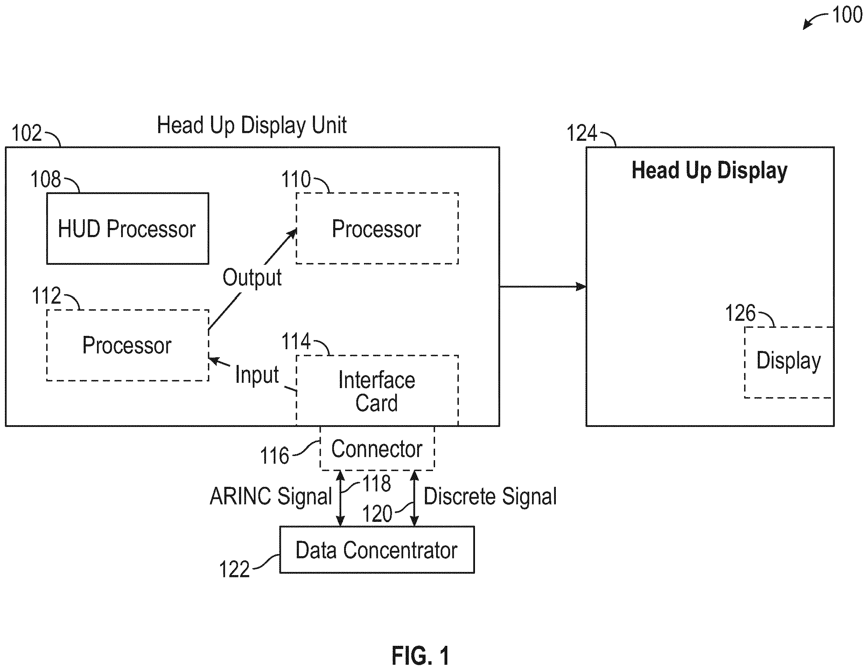

The proposed system consists of a processor and a display and it will be an addition and modification of the existing HUD (Head-up display) system. The processor will be added to the spare slot of the HUD processor and the display will be included in the head-up display as shown in Fig 1.

A head-up display or heads-up display, also known as a HUD, is A transparent display that presents data without requiring users to look away from their usual viewpoints. The origin of the name stems from a pilot being able to view information with the head positioned "up" and looking forward, instead of angled down looking at lower instruments. A HUD also has the advantage that the pilot's eyes do not need to refocus to view the outside after looking at the optically nearer instruments.

FIG. 1 is block diagram 100 of a system 100 for pilot validation and advisory, according to an embodiment. A typical HUD contains a projector unit (head up display 124) connected with a HUD processor 108.

The head up display (HUD) unit 124 is often a projection unit with an optical collimator setup: a convex lens or concave mirror with a cathode ray tube, light emitting diode display, or liquid crystal display at its focus. Typical setups produce an image where the light is collimated, (e.g., the focal point is perceived to be at infinity).

The head up display 124 often includes or is integrated with a combiner that is typically an angled flat piece of glass (e.g., a beam splitter) located directly in front of the viewing user. The combiner redirects a projected image transmitted from the processor 112 in such a way as to see the field of view and the projected infinity image at the same time. Combiners may have special coatings that reflect the monochromatic light projected onto it from the projector unit while allowing all other wavelengths of light to pass through. In some optical layouts, combiners may also have a curved surface to refocus the image from the projector.

According to one embodiment, a data concentrator 122 is configured to interface with the HUD 102 via a connector 116. The connector 116 is operatively connected to an interface card 114 installed on the HUD 102. The interface card 114 receives and sends an ARINC signal 118 and/or a discrete signal 120 to and from the data concentrator 122 to a processor 112 operating on the HUD 102. In some aspects the processor 112 sends output to a display interface card 110 installed on the main board of the HUD 102.

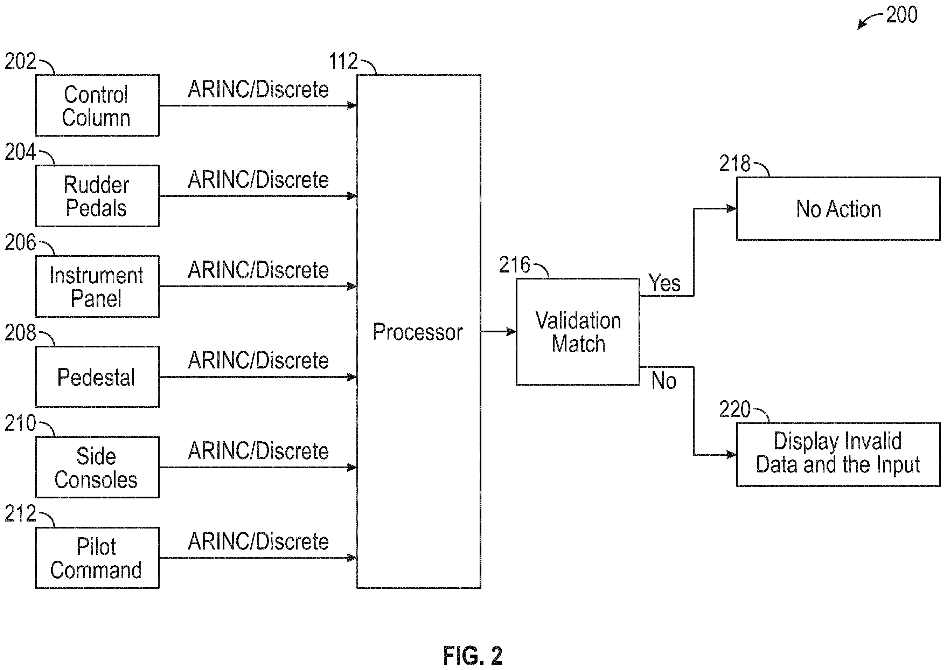

FIG. 2 is a functional flow diagram 200 of the system of FIG. 1, according to an embodiment. The processor 112 receives ARCINC and/or discrete inputs from a plurality of critical flight control mechanisms on an aircraft flight deck including, for example, a control column 202, rudder pedals 204, an instrument panel 206, a pedestal 208, side consoles 210, and one or more pilot commands 212. The data available in these will be considered by the pilot to operate the critical systems and thus will be one of the inputs to the Processor.

The control column 202 controls pitch (nose up/down via pull/push inputs) and roll (left/right bank via left/right turn inputs). The control column 202 may also control trim.

The rudder pedals 204 control jaw (right/left movement via push inputs on the right/left pedal) while flying, as well as function to steer the aircraft on the ground during taxi operations.

The instrument panel 206 is generally the main instrument panel that holds the most important flight displays regarding both flight performance and aircraft status.

The pedestal often contains the throttle and other engine controls for the navigational system side consoles 210. The pedestal 208 is used for placing the sidestick, and used for operation of the communication instruments. The functionality of the pedestal 208 may change depending on the type of airplane.

The pilot command 212 is provided to the controllers in critical systems, and is considered as second input to the processor 112.

The processor 112 is configured to receive the inputs 202-212, which are ARCINC and/or discrete signals, determines the valid state of pilot actions during flight, and outputs a validation match 216 to the HUD display 124 (FIG. 1). The output validation match may be indicative of invalid data/inputs 220, or be indicative of no necessary action that needs to be taken by the pilot 218. In some aspects, the invalid data/inputs 220 may include input to which the operation is considered to be invalid, and may further include a proposition of a valid operation.

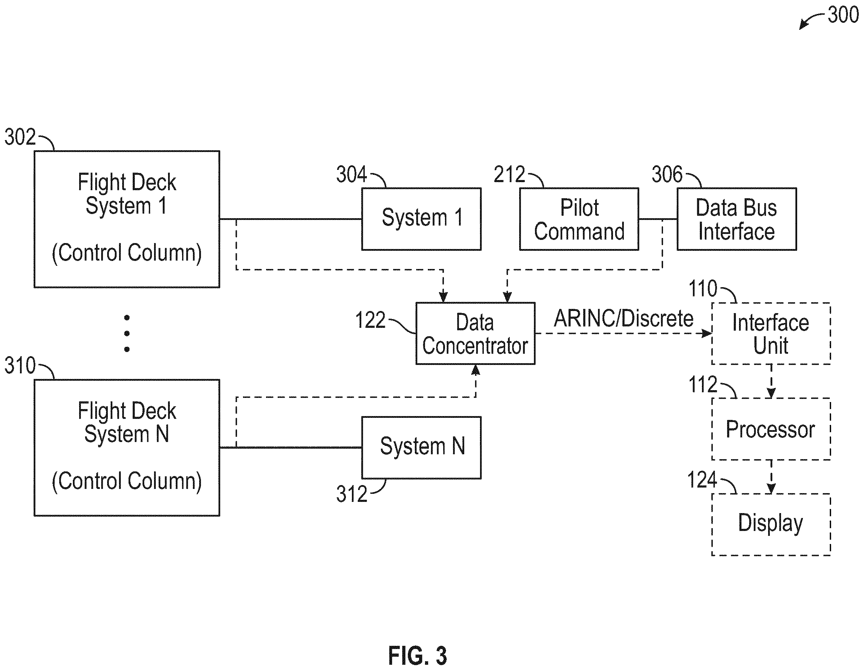

FIG. 3 depicts a block diagram 300 of hardware components configured to perform the functions described with respect to FIG. 2. As shown in FIG. 3, the data concentrator 122 receives inputs from the flight deck system (e.g., the control column) 302. From the control column, multiple flight deck systems are typically included (shown as flight deck system N 310, connecting system n 312). Those skilled in the art appreciate that many flight deck systems can be included as inputs to the processor 112.

The interface unit 110 is configured to communicate with the data concentrator 122 for interfacing the ARCINC/discrete input signals with the processor 112. The processor 112 performs the matching and error determination algorithm, and outputs the result to the display 124.

FIG. 5 is a flow diagram for a method 500 for pilot validation and advisory using the system of FIG. 1, according to an embodiment. After an initial starting step 402, the system boots up the advisory program at step 404, and receives the inputs from the data concentrator 122 via the interface unit 110. The inputs are fetched from the flight deck system 302, 310, 312, etc. At block 408, the processor 112 calculates the intended pilot operation by comparing one or more of the inputs received (block 406) with a known pilot action associated with a particular combination of inputs. For example, given a wind speed and altitude, the processor may determine that acceptable inputs from the rudder pedals 204 should match predestined criteria for actuation force, repeated actuations, etc.

The processor 112 validates the intended pilot operation with the actual pilot operation perceived by the processor through the input fetch step 406. If the perceived operation (the actual operation as determined by the inputs) matches the determined intended pilot operation (decision block 412), the processor takes no action (block 414). However when the intended pilot operation does not match the perceived pilot operation, at block 416 the processor 112 indicates an occurrence of an invalid operation by outputting an indicator on the HUD display 126. The indicator may include a recommendation for pilot action to remedy the incorrect procedure by the pilot. According to one embodiment, by way of example, to determine an intended brake control operation, the processor 112 determines an intended pilot operation of the aircraft brakes using the following algorithm: As a first step, the processor 112 receives an input indicative of an operation by a pilot of the aircraft brake mechanism (not shown). The processor 112 may access a system database of action associations with aircraft inputs associated with respective actions. For example, the processor 112 may note, by accessing a database, that the brakes are usually applied once the landing gear is deployed (i.e., the brakes cannot be applied when the aircraft is in air). To determine a current status of the aircraft landing gear, the processor 112 receives two inputs: 1) WOW (Weight on wheels) and On ground/air determination, and 2) Brake command from the pilot to the brake control unit.

In one aspect, the processor 112 (at the fetch input step 406) retrieves these inputs from the aircraft system(s) associated with WOW and ground/air sensory systems, and provides the inputs to the data concentrator. Accordingly, the processor 112 validates the intended pilot operation with the actual pilot operation perceived by the processor 112 through the input fetch step 406. The first set of inputs mentioned above will determine that the aircraft is in air and the second set of inputs is the pilot command.

If the perceived operation (the actual operation as determined by the inputs) matches the determined intended pilot operation (decision block 412), the processor takes no action (block 414). The algorithm used in the processor will process these inputs and determines whether the brakes were or were not commanded when WOW is 0 (indicative that the aircraft is in the air) which in turn will decide that the brakes should not be applied. For example, the brake command from the pilot obtained from the data concentrator will be compared against the intended pilot operation.

If both are matched there will be no action. Otherwise, the processor 112 outputs a pop up in the HUD display 126 indicative of the invalid operation.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for validation and advising for aircraft operation comprising:
a processor configured with a data concentrator, the data concentrator configured for:
obtaining a plurality of flight control signals and a perceived pilot operation from the data concentrator;
evaluating, based on the flight control signals due to pilot operations, an intended pilot operation;
determining, via the processor, whether the perceived pilot operation matches the intended pilot operation; and
outputting an advising message on an operatively connected display device.

2. The system of claim 1, wherein obtaining the plurality of flight control signals and the perceived pilot operation from the data concentrator comprises:
querying a flight deck system for an input, wherein the flight deck system is one of a plurality of critical systems for operation of the aircraft;
receiving, from the flight deck system, data indicative of an aircraft control action as well as perceived pilot operation; and
forwarding, via an interface unit, the data to the processor.

3. The system of claim 2, wherein the plurality of critical systems comprise: engine starting and stopping, aircraft rudder pedal control, and aircraft brake control.

4. The system of claim 1, 2 or 3, wherein determining whether a perceived pilot operation matches the intended pilot operation comprises:
evaluating, via the processor, the data from a flight deck system to determine a pilot operation of one or more critical systems of the aircraft;
determining an intended action based on the data from the flight deck system; and
comparing the determined intended action with the pilot operation to evaluate whether the intended action matches one of a predetermined plurality of actions associated with operation of the aircraft given a predetermined circumstance observed from the data from the flight deck.

5. The system of any preceding claim, wherein the flight control signals are both ARCINC and flight control signals.

6. A method for validation and advising for aircraft operation comprising:
obtaining, via a processor, a plurality of flight control signals and perceived pilot operation from a data concentrator;
evaluating, based on the flight control signals, an intended pilot operation;
determining, via the processor, whether a perceived pilot operation matches the intended pilot operation; and
outputting an advising message on an operatively connected display device.

7. The method of claim 6, wherein obtaining the plurality of flight control signals from the data concentrator comprises:
querying a flight deck system for an input, wherein the flight deck system is one of a plurality of critical systems for operation of the aircraft;
receiving, from the flight deck system, data indicative of an aircraft control action; and
forwarding, via an interface unit, the data to the processor.

8. The method of claim 7, wherein the plurality of critical systems comprise: engine starting and stopping, aircraft rudder pedal control, and aircraft brake control.

9. The method of claim 6, 7 or 8, wherein determining whether a perceived pilot operation matches the intended pilot operation comprises:
evaluating, via the processor, the data from the flight deck system to determine a pilot operation of one or more critical systems of the aircraft;
determining an intended action based on the data from the flight deck system; and
comparing the determined intended action with the pilot operation to evaluate whether the intended action matches one of a predetermined plurality of actions associated with operation of the aircraft given a predetermined circumstance observed from the data from the flight deck.

10. The method of any of claims 6 to 9, wherein the flight control signals are both ARCINC and flight control signals.
